# FASCICULE DE BREVET EUROPEEN

(11) **EP 3 111 178 B1**
(45) Date de publication et mention de la délivrance du brevet: **18.11.2020**
(21) Numéro de dépôt: 15715783.5
(22) Date de dépôt: 24.02.2015
(51) Int. Cl.: G02B 21/00, G02B 21/16, G01J 3/44, G01N 21/65

(54) **SYSTÈME ET PROCÉDÉ DE MICROSCOPIE OPTIQUE DE DIFFUSION RAMAN À OPTIQUE ADAPTATIVE**
OPTISCHES MIKROSKOPIESYSTEM UND VERFAHREN ZUR RAMAN-STREUUNG MIT ADAPTIVER OPTIK
OPTICAL MICROSCOPY SYSTEM AND METHOD FOR RAMAN SCATTERING WITH ADAPTIVE OPTICS

(30) Priorité: 27.02.2014 FR 1451597
(43) Date de publication de la demande: 04.01.2017
(73) Titulaire: Horiba France SAS, 91120 Palaiseau (FR)
(72) Inventeur: DUTERTRE, Bertrand, F-59150 Wattrelos (FR); CATTELAN, Denis, F-92160 Antony (FR); FRETEL, Emmanuel, F-59170 Croix (FR)
(74) Mandataire: Jacobacci Coralis Harle
(86) Numéro de dépôt international: PCT/FR2015/050447
(87) Numéro de publication internationale: WO 2015/128579

(56) Documents cités:
- US-A1- 2013 278 744
- JOHN M. GIRKIN ET AL: "Adaptive optics applied to coherent anti-Stokes Raman scattering microscopy", PROCEEDINGS OF SPIE, vol. 6860, 7 février 2008 (2008-02-07), pages 68600T-1-68600T-9, XP055139955, ISSN: 0277-786X, DOI: 10.1117/12.764445
- Booth J Martin ET AL: "Adaptive Optics for Biomedical Microscopy", OPN Optics & Phtonics News, janvier 2012 (2012-01), pages 22-29, XP055140038, Extrait de l'Internet: URL:http://www.opticsinfobase.org/view_art icle.cfm?gotourl=http%3A%2F%2Fwww%2Eoptics infobase%2Eorg%2FDirectPDFAccess%2FBC2C1F9 4%2DF776%2DC5A5%2DAD4994469EDF9A3B%5F22614 0%2Fopn%2D23%2D1%2D22%2Epdf%3Fda%3D1%26id% 3D226140%26seq%3D0%26mobile%3Dno&org= [extrait le 2014-09-12]
- YI K J ET AL: "Two-dimensional surface characterization of laser-deposited carbon films using Raman scattering", PROC. OF SPIE, vol. 6107, 2006, pages 1-12, XP040219136, USA

## Description

La présente invention se rapporte au domaine de la microscopie optique ou microspectrométrie Raman, pour l'analyse de matériaux ou d'échantillons biologiques.

En microscopie Raman, on éclaire un échantillon avec un faisceau d'excitation, qui est en général un faisceau laser, et on observe la lumière diffusée à des longueurs d'onde différentes de la longueur d'onde du faisceau laser d'excitation. La microscopie Raman se différencie donc des techniques de microscopie classiques dans lesquelles on observe la lumière réfléchie, transmise ou diffusée élastiquement par l'échantillon à la même longueur d'onde que le faisceau d'éclairage.

Il existe des appareils de microscopie Raman comprenant par exemple un microscope optique, une source laser, un objectif de microscope et un spectromètre. L'objectif de microscope focalise le faisceau laser en un point focal sur l'échantillon et forme un faisceau de diffusion. Le faisceau de diffusion comporte d'une part une composante dite de diffusion élastique ou Rayleigh, à la longueur d'onde du laser d'excitation, et d'autre part une composante dite de diffusion Raman, à des longueurs d'onde différentes du laser d'excitation, qui dépendent de la nature et la structure de l'échantillon. L'intensité de la diffusion Rayleigh est très supérieure à l'intensité de la diffusion Raman, le rapport d'intensité étant en général de l'ordre de 10⁶. Un filtre sélectif en longueur d'onde, par exemple de type notch filter, permet de séparer la diffusion Raman de la diffusion Rayleigh, pour permettre de détecter et d'analyser le spectre du faisceau de diffusion Raman. Par exemple, le document Yi K J et al., « Two-dimensional surface characterization of aser-deposited carbon films using Raman scattering », Proc. SPIE, vol. 6107, 2006, pages 1-12, XP040219136, décrit un appareil de microspectrométrie Raman de type confocal.

La microscopie Raman trouve de nombreuses applications en microanalyse des matériaux et en analyse de biochips, dans lesquels une multitude de cellules biologiques sont disposées en matrice sur une lamelle.

On connaît des systèmes d'optique adaptative dont les caractéristiques optiques de réflexion ou de réfraction peuvent être modifiées électroniquement par exemple pour corriger en temps réel les effets de certaines perturbations ou aberrations optiques. Il existe des systèmes d'optique adaptative à base de miroirs ou de micro-miroirs dans lesquels des micro-actionneurs permettent d'orienter ou de déformer la surface optique réflective. Il existe aussi des systèmes d'optique adaptative fonctionnant en transmission, par exemple des modulateurs à base de cristaux liquides (SLM ou Spatial Light Modulator) qui permettent de moduler spatialement les composantes d'un faisceau en intensité, en phase et/ou en polarisation.

Les systèmes d'optique adaptative, notamment à miroir déformable, sont utilisés depuis de nombreuses années en astronomie, par exemple pour corriger en temps réel les aberrations optiques dans un télescope.

Plus récemment, les systèmes d'optique adaptative ont été implantés dans des microscopes optiques classiques pour corriger des aberrations optiques du microscope lui-même ou certaines aberrations optiques induites par des non-uniformités dans l'échantillon.

La publication M. J. Booth « Adaptative optics in microscopy » Phil. Trans. R. Soc. A 2007 365, 2829-843, divulgue l'implantation d'un miroir déformable (DM) dans un microscope confocal de fluorescence, pour corriger les déformations induites par l'échantillon.

La publlication John M. Girkin et al. « Adaptative optics applied to coherent anti-Stokes Raman scattering microscopy », Proc. SPIE, vol. 6860, 2008-02-07, pages 68600T-1- 68600T-9, XP55139955 divulgue un microscope de diffusion Raman cohérente anti-Stokes (CARS) comprenant un système d'optique adaptative à miroir déformable disposé sur le trajet de deux faisceaux laser d'excitation.

D'autre part, le document de brevet US 2013/278744A1 décrit un appareil de microscopie optique confocal comprenant un dispositif d'optique adaptative.

Cependant, il est connu que les systèmes d'optique adaptative posent certaines difficultés : ils sont très complexes à utiliser, ils nécessitent soit un détecteur de front d'onde, soit des algorithmes compliqués de traitement du signal. L'utilisation d'un système d'optique adaptative requiert en général une procédure de calibration très complexe. Les systèmes d'optique adaptative apportent eux-mêmes des aberrations optiques qu'il faut aussi compenser. Dans les applications de mise en forme du faisceau (beam shaping), la dimension du faisceau laser doit être adaptée à la taille du miroir déformable, des lentilles liquides à focale ajustable, ou du miroir à cristaux liquide, car la résolution de la figure de diffraction sur l'échantillon en dépend. Enfin, les systèmes d'optique adaptative en transmission sont configurés pour fonctionner sur une gamme de longueurs d'onde assez large mais qui ne couvre pas tout le domaine spectral de l'ultraviolet (UVB) au proche infrarouge (NIR) qui est celui de la spectrométrie Raman.

Les difficultés à obtenir un rapport signal sur bruit satisfaisant dans un appareil de micro-spectrométrie Raman de l'état de la technique sont connues de l'homme du métier. Or tout système optique supplémentaire induit nécessairement des pertes par réflexion ou transmission.

Certains systèmes d'optique adaptative tels que ceux à modulation de phase ont l'inconvénient de ne pas être réciproques : le déphasage induit sur le trajet aller n'est pas compensé par le déphasage du trajet retour. Il est alors nécessaire de placer un système à modulation de phase sur le trajet du faisceau laser incident et un autre système à modulation de phase sur le trajet du faisceau Raman, ce qui double les difficultés et le coût du dispositif.

Par ailleurs, le signal Raman est particulièrement sensible aux matériaux optiques qu'il traverse, les verres induisent parfois de la fluorescence ou des pics parasites dans les spectres qui polluent l'analyse d'un échantillon.

L'homme du métier est ainsi généralement dissuadé d'insérer un système optique supplémentaire, et en particulier un système d'optique adaptative complexe, sur le trajet optique du faisceau laser d'excitation ou du faisceau de diffusion Raman, ce système optique étant susceptible de diminuer encore le rapport signal sur bruit du signal de micro-spectrométrie Raman.

Toutefois, de manière générale, il est souhaitable d'améliorer la luminosité, la résolution spatiale, la résolution spectrale d'un appareil de micro-spectrométrie de diffusion Raman, pour permettre une analyse plus précise des échantillons ou pour permettre, au même titre que l'épifluorescence, d'obtenir des cartographies Raman (Mapping Raman), d'une part mieux résolues spatialement, et d'autre part obtenues en des temps d'acquisition moins longs grâce aux meilleures densités de puissance qu'ils apportent en limitant les aberrations optiques.

D'autre part, un appareil de microspectrométrie Raman est en général très sensible aux défauts d'alignement optique, susceptibles d'apparaître avec des variations de température, de vibrations. Il existe des systèmes de correction du désalignement optique basés sur un miroir plan dont l'orientation est automatiquement ajustable en fonction de l'intensité du signal Raman d'un spectre de référence. Cependant, un tel système ne permet pas de corriger tous les défauts d'alignement optique en temps réel.

Afin de remédier à l'inconvénient précité de l'état de la technique, la présente invention propose un appareil de microscopie Raman ou de microspectrométrie Raman selon la revendication 1.

L'invention permet avantageusement d'améliorer la résolution spatiale (PSF ou Point Spread Function) d'un appareil de microscopie Raman ou de microspectrométrie Raman et/ou d'obtenir un meilleur rapport signal sur bruit du signal de diffusion Raman. L'invention permet aussi de réaliser une analyse topographique de l'échantillon.

Selon des aspects particuliers et avantageux de différents modes de réalisation :
- l'appareil de microscopie Raman ou de microspectrométrie Raman est de type confocal et comporte un trou confocal disposé entre l'objectif de microscope et les moyens de détection et ledit système d'optique adaptative est disposé sur le trajet optique du faisceau de diffusion Raman en amont et/ou en aval du trou confocal ;
- le faisceau laser est de section Gaussienne et le trou confocal de forme non circulaire ou anguleuse et ledit système d'optique adaptative est configuré pour adapter la section du faisceau laser focalisé sur l'échantillon à la forme du trou confocal, dans le plan du trou confocal ;
- l'appareil de microscopie Raman ou de microspectrométrie Raman comprend en outre un détecteur de front d'onde disposé sur un trajet optique du faisceau laser réfléchi par l'échantillon, le détecteur de front d'onde étant disposé dans un plan optiquement conjugué avec le plan image de l'objectif de microscope, le détecteur de front d'onde étant adapté pour détecter une position de l'échantillon dans le plan image de l'objectif de microscope ;
- ledit système d'optique adaptative comporte au moins deux miroirs adaptatifs disposés en série sur le trajet optique du faisceau laser entre la source laser et l'objectif de microscope, lesdits miroirs adaptatifs ayant chacun une focale variable et étant disposés de manière à former un système optique adaptatif focalisant de grandissement transversal variable ou un système optique adaptatif afocal de grossissement variable, le système optique adaptatif étant configuré pour modifier le diamètre du faisceau laser sur la pupille d'entrée de l'objectif de microscope en fonction du diamètre de la pupille d'entrée de l'objectif de microscope et/ou en fonction de la longueur d'onde d'excitation ;
- ledit système d'optique adaptative est disposé entre la source laser et le plan image de l'objectif de microscope, le système d'optique adaptative étant configuré pour moduler spatialement l'intensité du faisceau laser dans le plan image de l'objectif de microscope ;
- ledit système d'optique adaptative est configuré pour moduler dynamiquement l'intensité et/ou la phase et/ou la polarisation du faisceau laser dans le plan image de l'objectif de microscope ou dans le plan pupille de l'objectif microscope en fonction de l'échantillon analysé ;
- l'appareil de microscopie de diffusion Raman comprend un spectromètre Raman adapté pour recevoir et mesurer un faisceau de diffusion Raman, ledit système d'optique adaptative étant disposé sur le trajet optique du faisceau de diffusion Raman entre l'objectif de microscope et le spectromètre Raman, et ledit système d'optique adaptative étant configuré pour moduler dynamiquement l'intensité et/ou la phase et/ou la polarisation du faisceau de diffusion Raman en entrée du spectromètre Raman, de manière à réduire, dans le signal Raman détecté, les aberrations optiques, par exemple d'astigmatisme, induites par le spectromètre Raman ;
- ledit système d'optique adaptative est disposé sur le trajet optique du faisceau de diffusion Raman entre le trou confocal et une fente d'entrée du spectromètre, et ledit système d'optique adaptative est configuré pour former l'image du trou confocal sur la fente d'entrée du spectromètre.

L'invention concerne aussi un procédé de microscopie Raman ou de microspectrométrie Raman selon la revendication 10.

L'invention trouvera une application particulièrement avantageuse dans les appareils et procédés de microspectrométrie Raman et/ou de fluorescence.

La présente invention concerne également les caractéristiques qui ressortiront au cours de la description qui va suivre et qui sont définies dans les revendications dépendantes.

Cette description donnée à titre d'exemple non limitatif fera mieux comprendre comment l'invention peut être réalisée en référence aux dessins annexés sur lesquels :
- la figure 1 représente schématiquement un appareil de microspectrométrie optique de type Raman selon un mode de réalisation de l'invention ;
- la figure 2 représente schématiquement un système d'optique adaptative configuré pour former l'image d'un faisceau laser gaussien sur un trou confocal selon un mode de réalisation de l'invention ;
- la figure 3 illustre un système d'autofocus dans un appareil de microscopie optique selon un mode de réalisation particulier de l'invention ;
- la figure 4 représente schématiquement un système d'optique adaptative configuré pour corriger le front d'onde du faisceau laser d'excitation selon un autre mode de réalisation de l'invention.

### Dispositif

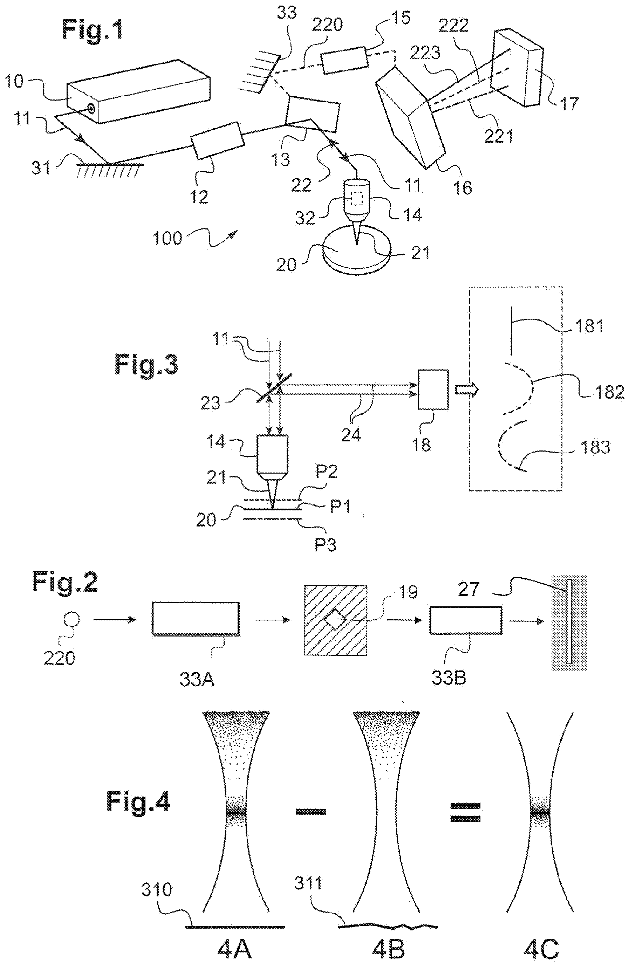

La figure 1 représente schématiquement un appareil de microscopie optique 100 de type appareil de microspectrométrie Raman. L'appareil de microscopie optique 100 comporte une source laser 10, qui est adaptée pour émettre un faisceau laser 11 à une longueur d'onde d'excitation À. La source laser peut être choisie parmi une diode laser, un laser à gaz, un laser à solide, un laser pompé par diode. Selon le matériau et le type de laser, la longueur d'onde émise peut être située dans l'UV lointain (244 nm, 266 nm), dans la gamme proche UV (325nm), dans la gamme gamme visible (405, 473, 532, 633, 785 et 830 nm) ou encore dans l'infra-rouge proche (1064nm). Le faisceau laser 11 peut être continu ou à impulsions selon le type de source laser et les applications recherchées.

De façon avantageuse, un système optique 12 est disposé sur le trajet optique du faisceau laser 11 entre la source laser 10 et un objectif de microscope 14. Le système optique 12 peut être utilisé pour adapter la taille du faisceau laser à la celle de la pupille de l'objectif par le biais d'un système d'expanseur de faisceau variable à optique adaptative de manière à améliorer la résolution spatiale au point de focalisation et se rapprocher de la tache d'Airy . Le système optique 12 peut aussi être utilisé pour adapter la forme du faisceau laser 11, généralement de symétrie circulaire, à une forme particulière de pupille, par exemple circulaire dans le cas d'un objectif à lentille ou annulaire dans le cas d'un objectif de type Cassegrain, afin de ne pas perdre d'énergie à l'entrée de l'objectif en particulier dans le cas d'un faisceau de faible puissance, par exemple dans l'UV.

L'objectif de microscope 14 reçoit le faisceau laser 11 et forme un faisceau laser 21 focalisé dans un plan image de l'objectif de microscope 14. On place un échantillon 20 au voisinage du plan image de l'objectif de microscope 14. Le faisceau laser focalisé 21 éclaire ainsi l'échantillon 20 en un point de dimension transverse idéalement proche de la tache d'Airy, soit 1.22λ/NA où NA représente l'ouverture numérique de l'objectif de microscope 14.

Dans une configuration de rétro-diffusion telle qu'illustrée sur la figure 1, l'objectif de microscope 14 collecte un faisceau rétrodiffusé 22 se propageant dans la direction opposée au du faisceau laser d'éclairage.

Un filtre 13 d'injection-réjection, par exemple un filtre dichroïque de type passe haut (edge filter) ou coupe bande (notch filter), permet de séparer spatialement le faisceau rétrodiffusé 22, d'une part, en un faisceau de diffusion Rayleigh, à la longueur d'onde λ du faisceau laser d'excitation et, d'autre part, en un faisceau de diffusion Raman 220, qui se situe à des longueurs d'onde différentes de la longueur d'onde λ.

Le trou confocal est situé sur le trajet du faisceau de diffusion Raman 220 seul. Un système optique 15 est disposé sur le trajet optique du faisceau de diffusion Raman 220 entre l'objectif de microscope 14 et le trou confocal, pour former l'image du point focalisé sur le trou confocal. Un autre système optique forme en général l'image du trou confocal sur la fente d'entrée d'un spectromètre 16. Le spectromètre 16 peut être de type diffractif ou dispersif. Le spectromètre 16 sépare spatialement le faisceau de diffusion Raman 220 en différentes composantes spectrales 221, 223, 223. Un détecteur 17 détecte l'intensité d'une ou de plusieurs composantes spectrales 221, 222, 223 en fonction de la longueur d'onde ou de la fréquence Raman. Un système d'analyse permet ensuite de traiter et d'analyser les composantes spectrales 221, 222, 223 pour en déduire une analyse de l'échantillon 20.

Dans une configuration de transmission (non illustrée), un système optique collecte un faisceau diffusé à travers l'échantillon et se propageant dans la direction du faisceau laser d'éclairage.

Enfin, dans une autre configuration, on collecte le faisceau de diffusion dans une direction transverse au faisceau laser d'excitation.

De façon avantageuse, un seul et même appareil de microscopie ou de microspectrométrie peut être configuré pour permettre à la fois une mesure de rétro-diffusion et de diffusion vers l'avant et/ou de diffusion transverse.

De manière connue par ailleurs, dans certains modes de réalisation de microscopie à balayage, l'appareil de microscopie comporte en outre des moyens de déplacement angulaire du faisceau laser, constitués par exemple d'un scanner à un ou deux axes, de manière à ce que le faisceau laser focalisé balaye une zone sur la surface de l'échantillon. Le balayage laser permet de former une image Raman de résolution microscopique. Dans d'autres modes d'utilisation, le signal est intégré pendant le balayage du faisceau laser afin de moyenner le signal Raman sur une zone de l'échantillon.

L'appareil de microscopie Raman 100 illustré sur la figure 1 comporte au moins un système d'optique adaptative 31, 32 et/ou 33.

Le système d'optique adaptative 31 est disposé entre la source laser 10 et le filtre d'injection-réjection 13 sur le trajet optique du faisceau laser 11 d'excitation uniquement. Dans l'exemple illustré sur la figure 1, le système d'optique adaptative 31 est un système optique fonctionant en réflexion, par exemple de type miroir adaptatif.

Le système d'optique adaptative 32 est disposé entre le filtre d'injection-réjection 13 et l'objectif de microscope 14 sur le trajet optique commun du faisceau laser 11 d'excitation et du faisceau de diffusion 22, comprenant à la fois la diffusion Rayleigh et la diffusion Raman. Dans l'exemple illustré sur la figure 1, le système d'optique adaptative 32 est un système optique fonctionant en transmission, par exemple de type modulateur spatial de lumière ou SLM.

Le système d'optique adaptative 33 est disposé entre le filtre d'injection-réjection 13 et le spectromètre 16 sur le trajet optique du faisceau de diffusion Raman 220 seul. Dans l'exemple illustré sur la figure 1, le système d'optique adaptative 33 est un système optique fonctionant en réflexion, par exemple de type miroir adaptatif.

Les systèmes d'optique adaptative 31, 32 et 33 peuvent être utilisés indépendamment l'un de l'autre ou de manière combinée, par paire, ou encore tous ensemble.

La disposition, le nombre et le type de systèmes d'optique adaptative sur les différents trajets optiques permettent avantageusement de sélectionner une fonction associée à l'un des systèmes d'optique adaptative ou de combiner les fonctions de plusieurs systèmes d'optique adaptative.

Un système d'optique adaptative 31, 32, 33 peut être utilisé pour corriger des aberrations optiques dans l'appareil de microspectrométrie et/ou de l'échantillon, selon l'application.

Nous allons détailler quelques exemples de réalisation, en particulier en lien avec les figures 2-4.

La figure 2 illustre schématiquement un premier mode de réalisation, dans lequel un système d'optique adaptative 33 est disposé dans un microscope Raman de type confocal. En micro-spectrométrie Raman, on utilise en général un trou confocal 19 de forme généralement non circulaire, telle qu'une forme de losange en micro-spectrométrie Raman ou de forme hexagonale en microscopie par fluorescence. Le trou confocal 19 est réalisé dans un support opaque. Or, le faisceau laser 11 issu de la source laser est généralement un faisceau Gaussien de section circulaire. Le faisceau de diffusion Raman 220 est aussi en général de section à symétrie de révolution autour de l'axe optique.

Dans l'art antérieur, un système optique classique à lentilles ou à miroirs forme l'image du waist du faisceau Raman dans le plan du trou confocal 19 de manière à ce que le diamètre du faisceau laser 11 recouvre la totalité de la surface du trou confocal 19. Cette formation d'image induit des pertes d'intensité du faisceau laser par vignettage sur les bords du trou confocal 19, dans le cas où la confocalité n'est pas recherchée mais seulement la luminosité, le trou étant ouvert au maiximum.

Selon le premier mode de réalisation particulier et avantageux, on utilise un système d'optique adaptative 33A configuré pour former l'image d'analyse de l'échantillon dans le plan du trou confocal dans le plan du trou confocal 19 et pour adapter la forme du faisceau à la forme du trou confocal 19. Dans un exemple de réalisation, le système d'optique adaptative 33A consiste en un miroir d'optique adaptative situé sur le trajet de diffusion Raman uniquement. Ce miroir d'optique adaptative modifie la phase ou l'intensité du champ incident pour modeler la forme du faisceau sur le trou différemment de la forme du faisceau issu de la source. Par exemple, on génère ainsi une distribution d'énergie en forme de losange dans certains cas où le trou a la même taille que l'image au point de focalisation 21, ce qui a l'avantage de ne pas induire de perte de signal, mais avec une faible confocalité. Dans un autre exemple, on génère une distribution d'énergie de forme elliptique à l'intérieur du trou confocal grand ouvert qui est imagé sur la fente d'entrée du spectromètre de manière à obtenir une distribution d'énergie dans le sens de la hauteur de la fente, sans vignettage sur la fente d'entrée du spectromètre.

Dans une variante de ce premier mode de réalisation, un autre système d'optique adaptative 33B est disposé entre le trou confocal 19 et la fente d'entrée 27 du spectromètre sur le chemin optique du faisceau de diffusion Raman 220. De façon avantageuse, l'autre système d'optique adaptative 33B forme l'image du faisceau de diffusion Raman 220 sur la fente d'entrée 27 du spectromètre. Par exemple, le système d'optique adaptative 33B est configuré pour adapter la forme de losange du trou confocal à la forme rectangulaire allongée de la fente d'entrée 27 du spectromètre, afin de maximiser l'intensité du signal de diffusion Raman détecté. Dans un autre exemple, le système d'optique adaptative 33B est configuré pour adapter la forme circulaire ou elliptique du faisceau de diffusion Raman 220 à la forme rectangulaire allongée de la fente d'entrée 27 du spectromètre.

Ce premier mode de réalisation permet un gain en luminosité sur le faisceau de diffusion Raman et permet également un réalignement sur le trou et/ou sur la fente d'entrée du spectromètre, bien que les propriétés de confocalité soient relativement faibles.

La figure 3 illustre schématiquement une variante d'un appareil de microscopie ou microspectrométrie Raman comprenant en outre un dispositif d'auto-focalisation ou d'autofocus.

Dans les appareils de microscopie de l'art antérieur, le dispositif d'auto focus comporte en général un sténopé ou pinhole et un capteur de type photodiode. Une lame semi-transparente ou un cube séparateur transmet une partie du faisceau laser en direction de l'objectif de microscope 14 et renvoie une partie, en général 10%, du faisceau laser réfléchi par la surface de l'échantillon en direction du sténopé. Le sténopé, par exemple de 100 microns de diamètre, est disposé dans un plan optiquement conjugué avec le plan image de l'objectif de microscope. Le capteur est disposé derrière le sténopé. Une lentille focalise l'image de la surface échantillon sur la photodiode. La focale de la lentille est définie de manière à avoir un grandissement suffisant pour une bonne résolution en Z (axe du faisceau) et donc une bonne précision de l'auto focus. Un système motorisé micrométrique permet en général un déplacement axial relatif entre l'échantillon et l'objectif de microscope. Le capteur détecte l'intensité du signal réfléchi en fonction de ce déplacement axial. Le maximum d'intensité détecté par la photodiode indique la position de la surface réfléchissante de l'échantillon dans le plan image de l'objectif. Un système automatique d'autofocus permet ainsi de commander le déplacement axial relatif d'une platine porte-échantillon et l'acquisition du signal de réflexion sur le capteur de manière à placer l'échantillon dans le plan focal de l'objectif de microscope. Cependant, un tel dispositif et procédé d'auto-focalisation n'est pas sensible au sens de la défocalisation, car l'intensité du faisceau réfléchi décroit généralement de manière symétrique de part et d'autre du plan image. Au moins un aller-retour autour du plan image est nécessaire. Les dispositifs et procédés d'auto-focalisation sont donc en général assez lents et convergent parfois difficilement car ils demandent un alignement parfait, notamment si on part d'une position initiale de l'échantillon éloignée du plan image de l'objectif de microscope.

La figure 3 illustre un détail d'un appareil de microscopie à diffusion Raman et plus particulièrement un dispositif d'auto-focalisation dans un tel appareil de microscopie. Sur la figure 3, on a représenté l'objectif de microscope 14, le plan image (ou plan focal) P1 de l'objectif de microscope 14, un plan P2 situé entre l'objectif de microscope et le plan image P1 et un plan P3 situé au-delà du plan image P1.

Un séparateur de faisceau 23 (ou beam splitter), par exemple une lame semi-transparente ayant un coefficient de réflexion de 10% et un coefficient de transmission de 90%, transmet le faisceau laser 11 en direction de l'objectif de microscope 14 et renvoie une partie 31 du faisceau laser réfléchi par la surface de l'échantillon en direction d'un détecteur de front d'onde 18, par exemple un détecteur ou une caméra de type Shack-Hartmann. L'analyse du faisceau réfléchi permet par exemple de décomposer le signal en polynômes de Zernike.

On s'intéresse plus particulièrement au second polynôme Z²₀. Lorsque la surface réfléchissante de l'échantillon est dans le plan image P1, on détecte un signal de front d'onde 181 de forme déterminée, par exemple plane. Lorsque la surface réfléchissante de l'échantillon est dans le plan image P2, on détecte un signal de front d'onde 182, qui présente une courbure par rapport au signal 181. Lorsque la surface réfléchissante de l'échantillon est dans le plan image P3, on détecte un signal de front d'onde 183, qui présente une autre courbure, de sens opposée à la courbure du signal de font d'onde 182, par rapport au signal de font d'onde 181. Le détecteur de front d'onde permet ainsi de détecter la position de l'échantillon dans le plan image P1 de l'objectif de microscope de manière plus précise et plus rapide.

De plus, l'analyse d'un mode de Zernike (le second polynôme Z²₀) permet de détecter un changement d'orientation de la courbure du front d'onde et ainsi de détecter le sens de la défocalisation de l'échantillon par rapport au plan image P1. L'algorithme d'auto-focalisation peut alors converger plus rapidement qu'avec un détecteur d'intensité.

De manière alternative ou complémentaire, d'autres modes de Zernike pourraient être exploités. Ainsi, le premier mode de Zernike peut permettre d'analyser si l'échantillon est incliné.

De manière plus générale l'utilisation de l'optique adaptative et d'un détecteur de front d'onde permet de combiner la spectrométrie Raman avec une technique de topographie de surface.

Dans un autre mode de réalisation particulier et avantageux, on utilise un système d'optique adaptative comprenant deux composants optiques adaptatifs, en transmission ou en réflexion, par exemple de type miroir à membrane déformable, ou un systèmes de x2 lentilles liquides disposés en série sur le trajet optique du faisceau laser 11. Les deux composants optiques adaptatifs sont disposés de manière à former un système optique adaptatif afocal. Dans ce mode de réalisation, les deux composants optiques adaptatifs sont configurés pour présenter des rayons de courbures différents l'un de l'autre, de manière former un système optique adaptatif, par exemple afocal ayant un grossissement différent de 1.

Dans une première variante, le système optique adaptatif peut être modifié de manière à ce que la focale d'un ou des deux miroirs varie, tout en conservant un arrangement de système afocal, de manière à former un système optique afocal de grossissement variable, de préférence supérieur à 1.

Un tel système optique adaptatif afocal permet différentes applications.

Dans une première application, un système optique adaptatif afocal de grossissement variable est disposé sur le trajet optique du faisceau laser 11 entre la source laser 10 et l'objectif de microscope 14 ou sur le trajet commun. Les deux focales des deux composants optiques adaptatifs varient conjointement, ce qui permet d'adapter la taille du laser à la pupille de chaque objectif quelquesoit la longueur d'onde. Ce système permet une amélioration de la résolution spatiale pour atteindre la limite de diffraction (tache d'Airy).

Le grossissement variable du système d'optique adaptative permet de former un expanseur de faisceau variable. Ce système d'optique adaptative permet d'adapter le diamètre du faisceau laser au diamètre de pupille de l'objectif et ainsi de limiter les pertes d'intensité sur le faisceau laser d'excitation. Un tel système d'optique adaptative afocal de grossissement variable permet un changement de laser d'excitation, par exemple pour changer de longueur d'onde λ, tout en optimisant le transfert d'intensité de la source laser vers l'objectif de microscope.

Dans une autre variante, le système optique adaptatif peut être modifié de manière à ce que la focale d'un ou des deux miroirs varie, de manière à former un système optique focalisant de grandissement transverse variable.

Dans une autre application, on dispose le système optique adaptatif uniquement sur le trajet commun. Puis on dérègle volontairement le système optique adaptatif de manière à converger sur la pupille d'objectif et à éclairer ainsi une plus large zone de l'échantillon. Cette configuration permet de localiser rapidemment des zones d'intérêt par imagerie sur caméra matricielle et de faire une analyse Raman sur ces zones d'intérêt après un repérage grossier. Cette configuration permet d'éviter de balayer toute la surface de l'échantillon pour localiser une zone d'intérêt.

Dans un autre mode de réalisation particulier et avantageux, on utilise un système d'optique adaptative 31 disposé sur le trajet optique du faisceau laser entre la source laser 10 et l'objectif de microscope 14 pour modifier la distribution spatiale en énergie du faisceau focalisé sur l'échantillon 20.

De façon particulièrement avantageuse, on couple un logiciel de reconnaissance morphologique de particules (de type module logiciel "particle finder" fourni en option avec le logiciel d'analyse Raman d'HORIBA LabSpec6) avec un système d'optique adaptative pour structurer spatialement la forme du laser en fonction de la forme de la particule à analyser.

Par exemple, un système optique adaptatif à modulation de phase (spatial light modulator) calcule la transformée de Fourier d'une image, par exemple une image de l'échantillon avec des particules, et impose cet hologramme sur le système optique adaptatif à modulation de phase à cristaux liquide. Après réflexion du faisceau laser sur ce système optique adaptatif à modulation de phase, le faisceau en sortie du système optique adaptatif à modulation de phase reproduit l'image initiale (cf article Holographic analysis of caged neurotransmitter NATURE METHODS | VOL.5 NO.9 | SEPTEMBER 2008) ou mieux encore, ré-image les particules éclairées dans le sens de la hauteur de la fente d'entrée du spectromètre ce qui permet d'analyser plusieurs particules en même temps par une seule lecture CCD.

La difficulté réside dans le fait qu'il faut un second système d'optique adaptative sur le chemin de diffusion Raman (le premier étant sur le chemin laser uniquement) qui recombine toutes les particules éclairés en même temps dans l'unique trou confocal. En effet, un seul systeme d'optique adaptative à modulation de phase sur le trajet commun ne fonctionnerait pas car un tel système d'optique adaptative n'est pas réversible, la phase changée à l'aller serait doublée au retour et non pas compensée. L'avantage de ce mode de réalisation est d'éclairer uniquement la zone d'intérêt sans illuminer les environs, ce qui serait nuisible au rapport signal/bruit.

Ce mode de réalisation permet d'éviter des zones indésirables sur l'échantillon en concentrant l'énergie du faisceau laser uniquement sur la partie utile du champ optique. On s'affranchit ainsi des signaux indésirables provenant des particules environnantes ou du substrat.

Dans une autre variante, le système d'optique adaptative 31 est utilisé pour corriger la distribution spatiale du front d'onde du laser de manière à réduire l'étendue spatiale du faisceau laser au point focal (ou la PSF pour Point spread function) et/ou pour corriger les aberrations optiques notamment provenant des variations d'indice dans l'échantillon lui-même, de manière à améliorer la résolution spatiale de l'appareil de microscopie.

La figure 4 illustre un exemple de correction de front d'onde du faisceau laser d'excitation. Sur la figure 4A on a représenté une coupe longitudinale du faisceau laser 11 autour du waist, c'est-à-dire de la zone de focalisation. En absence de déformation du système d'optique adaptative 310, le faisceau laser comporte des perturbations, dues à des aberrations optiques induites par l'appareil de microscopie et/ou par l'échantillon. Sur la figure 4B, on a représenté l'effet d'une déformation 311 du système d'optique adaptative, qui est configuré pour compenser les perturbations du front d'onde du faisceau laser. Le système d'optique adaptative 31 ainsi configuré, permet de supprimer les perturbations du faisceau laser (figure 4C). Ce mode de réalisation permet ainsi d'améliorer la résolution spatiale au point de focalisation du faisceau laser.

Dans un autre mode de réalisation, on dispose un système d'optique adaptative 33 entre le filtre 13 et le spectromètre 16, sur le trajet optique du faisceau de diffusion Raman 22. De façon avantageuse, le système d'optique adaptative 33 est configuré pour compenser des aberrations optiques du spectromètre. Ainsi on parvient à corriger le défaut d'astigmatisme par exemple, en modulant le faisceau comme le ferait une lentille cylindrique qui décompose les plan sagitaux et tangentiels et ne modifie qu'un seul de ces plans. On créée un rayon de courbure selon une seule direction du miroir d'optique adaptative sans toucher à l'autre. Ce mode de réalisation permet de créer une lentille cylindrique avec une focale variable dans une seule direction pour compenser l'amplitude du défaut d'astigmatisme.

Plus particulièrement, le système d'optique adaptative 33 est configuré pour compenser le défaut d'astigmatique provoqué par les miroirs du spectromètre, afin de supprimer les défauts d'astigmatisme sur le détecteur 17 tout en obtenant une meilleure densité d'énergie detectée. Par exemple, on commande le système d'optique adaptative 33 de manière à ce qu'il induise un défaut d'astigmatisme inverse à celui du spectromètre 16 avant la fente d'entrée du spectromètre.

Les raies d'un spectre correspondent à des points imagés sur un détecteur type CCD. Pour que les raies soient fines (bonne résolution spectrale), on s'arrange pour faire le tirage des miroirs concave à l'interieur du spectromètre de manière à avoir des points image sur CCD les plus fins possible. On a donc des points elliptiques vertical et donc une perte sur la hauteur. En faisant une image CCD du spot sur le détecteur, on visualise très bien ce défaut d'astigmatisme qu'on corrige en partie en plaçant une lentille cylindrique qui compense ce défaut avant la fente en créant le défaut inverse.

Ce mode de réalisation permet d'éviter l'utilisation d'un système d'optique passif unique dédié à chaque spectromètre 16.

Dans un autre mode de réalisation, on utilise un ou plusieurs composants d'optique adaptative dans un appareil de microscopie Raman pour stabiliser automatiquement l'alignement optique de l'appareil de microscopie Raman par rapport aux dérives thermiques ou aux vibrations mais également une stabilisation du focus sur échantillon. Ainsi, on acquiert un spectre de contrôle avec échantillon de référence dans des conditions particulières pour obentir une indication de l'état général de l'instrument. Pour des systèmes très dispersifs (ce qui correspond en général à un appareil volumineux, à grande focale) assujettis aux dilations, l'optique adaptative est utilisée pour compenser la perte de signal sans perdre l'alignement d'usine très minutieux. Dans ce cas, plus qu'une fonction d'amélioration de performance, l'optique adaptative a un rôle en maintenance de la qualité d'un appareil.

## Revendications

1. Appareil de microscopie Raman ou de microspectrométrie Raman (100) de type confocal comprenant :
- une source laser (10) adaptée pour émettre un faisceau laser (11) à une longueur d'onde d'excitation λ ;
- un objectif de microscope (14) adapté pour recevoir le faisceau laser (11) et pour focaliser le faisceau laser dans un plan image de l'objectif de microscope (14), le faisceau laser focalisé (21) étant destiné à éclairer un échantillon (20) ;
- un système optique (14) adapté pour collecter un faisceau optique de diffusion (22) sur l'échantillon ;
- un filtre (13) adapté pour recevoir le faisceau optique de diffusion (22) et pour séparer le faisceau optique de diffusion (22) d'une part en un faisceau de diffusion Rayleigh, et d'autre part en un faisceau de diffusion Raman (220) ;
- un système de détection (16, 17) comprenant un spectromètre Raman (16, 17) adapté pour recevoir et mesurer le faisceau de diffusion Raman collecté (220),
- un trou confocal (19) disposé entre l'objectif de microscope (14) et le spectromètre Raman (16,17) sur le trajet optique du faisceau de diffusion Raman (220), où l'appareil de microscopie Raman ou de microspectrométrie Raman (100) comporte en outre :
- un système d'optique adaptative (33, 33A, 33B) disposé sur un trajet optique du faisceau de diffusion Raman (220) en amont du trou confocal (19) ledit système d'optique adaptative (33, 33A, 33B) étant configuré pour générer une distribution d'énergie de forme elliptique à l'intérieur du trou confocal grand ouvert sur la fente d'entrée du spectromètre de manière à obtenir une distribution d'énergie dans le sens de la hauteur de la fente.

2. Appareil de microscopie Raman ou de microspectrométrie Raman selon la revendication 1 dans lequel un autre système d'optique adaptative (33, 33A, 33B) est disposé sur le trajet optique du faisceau de diffusion Raman (220) en aval du trou confocal (19).

3. Appareil de microscopie Raman ou de microspectrométrie Raman selon la revendication 2 dans lequel le faisceau laser (11) étant de section Gaussienne et le trou confocal (19) de forme non circulaire ou anguleuse, et comportant en outre un autre système d'optique adaptative (31, 32) disposé entre la source laser (10) et les moyens de filtrage (13) sur un trajet optique du faisceau laser (1), cet autre système d'optique adaptative (31, 32) étant configuré pour adapter la section du faisceau laser focalisé sur l'échantillon à la forme du trou confocal (19), dans le plan du trou confocal (19).

4. Appareil de microscopie Raman ou de microspectrométrie Raman selon l'une des revendications 1 à 3 comprenant en outre un détecteur de front d'onde (18) disposé sur un trajet optique du faisceau laser réfléchi par l'échantillon (20), le détecteur de front d'onde (18) étant disposé dans un plan optiquement conjugué avec le plan image (P1) de l'objectif de microscope (14), le détecteur de front d'onde (18) étant adapté pour détecter une position de l'échantillon dans un plan image (P1) de l'objectif de microscope (14).

5. Appareil de microscopie Raman ou de microspectrométrie Raman selon l'une des revendications 1 à 4 dans lequel ledit autre système d'optique adaptative (31) comporte au moins deux miroirs adaptatifs disposés en série sur le trajet optique du faisceau laser entre la source laser et l'objectif de microscope, lesdits au moins deux miroirs adaptatifs ayant chacun une focale variable et étant disposés de manière à former un système optique adaptatif focalisant de grandissement variable ou un système optique adaptatif afocal de grossissement variable, ledit autre système optique adaptatif étant configuré pour modifier le diamètre du faisceau laser (11) sur la pupille d'entrée de l'objectif de microscope (14) en fonction du diamètre de la pupille d'entrée de l'objectif de microscope (14).

6. Appareil de microscopie Raman ou de microspectrométrie Raman selon l'une des revendications 1 à 5 dans lequel ledit autre système d'optique adaptative (31, 32) est disposé entre la source laser et le plan image de l'objectif de microscope, le système d'optique adaptative (31, 32) étant configuré pour moduler spatialement l'intensité du faisceau laser (11, 21) dans le plan image (P1) de l'objectif de microscope (14).

7. Appareil de microscopie Raman ou de microspectrométrie Raman selon la revendication 6 dans lequel ledit autre système d'optique adaptative (31, 32) est configuré pour moduler dynamiquement l'intensité et/ou la phase du faisceau laser (11, 21) dans le plan image de l'objectif de microscope (14) ou dans le plan pupille de l'objectif microscope en fonction de l'échantillon (20) analysé.

8. Appareil de microscopie Raman ou de microspectrométrie Raman selon l'une des revendications 1 à 6, ledit système d'optique adaptative (33, 33A, 33B) étant configuré pour moduler dynamiquement l'intensité et/ou la phase du faisceau de diffusion Raman (220) en entrée du spectromètre (16, 17), de manière à réduire, dans le signal Raman détecté, les aberrations optiques, par exemple d'astigmatisme, induites par le spectromètre (16, 17).

9. Appareil de microscopie Raman ou de microspectrométrie Raman selon les revendications 2 et 8 dans lequel ledit système d'optique adaptative (33B) est disposé sur le trajet optique du faisceau de diffusion Raman (220) entre le trou confocal (19) et une fente d'entrée (27) du spectromètre (17), et ledit système d'optique adaptative (33B) étant configuré pour former l'image du trou confocal (19) sur la fente d'entrée (27) du spectromètre.

10. Procédé de microscopie Raman ou de microspectrométrie Raman comprenant les étapes suivantes :
- émission par une source laser (10) d'un faisceau laser (11) à une longueur d'onde d'excitation λ ;
- focalisation par un objectif de microscope (14) du faisceau laser (11) dans un plan image de l'objectif de microscope (14), le faisceau laser focalisé (21) étant destiné à éclairer un échantillon (20) ;
- collection d'un faisceau optique de diffusion (22) par un système optique (14) ;
- filtrage du faisceau optique de diffusion (22) par un filtre (13) de manière à le séparer d'une part en un faisceau de diffusion élastique, ou Rayleigh, et d'autre part en un faisceau de diffusion Raman (220) ; - réception et mesure du faisceau de diffusion Raman (220) par un spectromètre Raman (16, 17);
- filtrage du faisceau de diffusion Raman (220) par un trou confocal (19) ; disposé entre l'objectif de microscope (14) et le spectromètre Raman (16,17); et comportant une étape d'utilisation d'un système d'optique adaptative (33, 33A, 33B) disposé sur un trajet optique du faisceau de diffusion Raman (220) en amont du trou confocal ledit système d'optique adaptative (33, 33A, 33B) étant configurée pour générer une distribution d'énergie de forme elliptique à l'intérieur du trou confocal grand ouvert sur la fente d'entrée du spectromètre de manière à obtenir une distribution d'énergie dans le sens de la hauteur de la fente.

## Patentansprüche

1. Raman-Mikroskopie- oder Raman-Mikrospektrometriegerät (100) vom konfokalen Typ mit
- einer Laserquelle (10), die dazu ausgelegt ist, einen Laserstrahl (11) mit einer Anregungswellenlänge λ auszusenden,
- einem Mikroskopobjektiv (14), das dazu ausgelegt ist, den Laserstrahl (11) zu empfangen und den Laserstrahl in einer Bildebene des Mikroskopobjektivs (14) zu fokalisieren, wobei der fokalisierte Laserstrahl (21) dazu bestimmt ist, eine Probe (20) zu beleuchten,
- einem optischen System (14), das dazu ausgelegt ist, einen optischen ausgesandten Strahl (22) auf der Probe zu sammeln,
- einem Filter (13), der dazu ausgelegt ist, den optischen ausgesandten Strahl (22) zu empfangen und den optischen ausgesandten Strahl (22) einerseits in einen ausgesandten Rayleigh-Strahl und andererseits in einen ausgesandten Raman-Strahl zu teilen,
- einem Erfassungssystem (16, 17) mit einem Raman-Spektrometer (16, 17), das dazu ausgelegt ist, den gesammelten ausgesandten Raman-Strahl (220) zu empfangen und zu messen,
- einem konfokalen Loch (19), das zwischen dem Mikroskopobjektiv (14) und dem Raman-Spektrometer (16, 17) auf dem optischen Weg des ausgesandten Raman-Strahls (220) angeordnet ist,
wobei das Raman-Mikroskopie- oder Raman-Mikrospektrometriegerät (100) außerdem
- ein System adaptiver Optik (33, 33A, 33B) aufweist, das auf einem optischen Weg des ausgesandten Raman-Strahls (220) vor dem konfokalen Loch (19) angeordnet ist, wobei das System adaptiver Optik (33, 33A, 33B) dazu ausgelegt ist, innerhalb des konfokalen, weit geöffneten Lochs auf dem Eingangsspalt des Spektrometers eine Energieverteilung elliptischer Form zu erzeugen, um eine Energieverteilung in der Richtung der Höhe des Spalts zu erhalten.

2. Raman-Mikroskopie- oder Raman-Mikrospektrometriegerät gemäß Anspruch 1, bei dem ein weiteres System adaptiver Optik (33, 33A, 33B) auf dem optischen Weg des ausgesandten Raman-Strahls (220) vor dem konfokalen Loch (19) angeordnet ist.

3. Raman-Mikroskopie- oder Raman-Mikrospektrometriegerät gemäß Anspruch 2, bei dem der Laserstrahl (11) einen Gaußschen Querschnitt aufweist und das konfokale Loch (19) von nicht kreisrunder oder winkliger Form ist, und das außerdem ein weiteres System adaptiver Optik (31, 32) aufweist, das zwischen der Laserquelle (10) und den Filtermitteln (13) auf einem optischen Weg des Laserstrahls (1) angeordnet ist, wobei das weitere System adaptiver Optik (31, 32) dazu ausgelegt ist, den Querschnitt des auf die Probe fokalisierten Laserstrahls an die Form des konfokalen Lochs (19) in der Ebene des konfokalen Lochs (19) anzupassen.

4. Raman-Mikroskopie- oder Raman-Mikrospektrometriegerät gemäß einem der Ansprüche 1 bis 3, das außerdem einen auf einem optischen Weg des von der Probe (20) reflektierten Laserstrahls angeordneten Wellenfrontdetektor (18) aufweist, wobei der Wellenfrontdetektor (18) in einer zur Bildebene (P1) des Mikroskopobjektivs (14) optisch konjugierten Ebene angeordnet ist, wobei der Wellenfrontdetektor (18) dazu ausgelegt ist, eine Position der Probe in einer Bildebene (P1) des Mikroskopobjektivs (14) zu entdecken.

5. Raman-Mikroskopie- oder Raman-Mikrospektrometriegerät gemäß einem der Ansprüche 1 bis 4, bei dem das weitere System adaptiver Optik (31) wenigstens zwei adaptive, auf dem optischen Weg des Laserstrahls in Reihe zwischen der Laserquelle und dem Mikroskopobjektiv angeordnete adaptive Spiegel aufweist, wobei die beiden adaptiven Spiegel jeweils eine variable Brennweite haben und so angeordnet sind, daß sie ein optisches adaptives fokalisierendes System mit variabler Vergrößerung oder ein optisches adaptives afokales System mit variabler Vergrößerung bilden, wobei das weitere adaptive optische System dazu ausgelegt ist, den Durchmesser des Laserstrahls (11) auf der Eingangspupille des Mikroskopobjektivs (14) in Abhängigkeit vom Durchmesser der Eingangspupille des Mikroskopobjektivs (14) zu ändern.

6. Raman-Mikroskopie- oder Raman-Mikrospektrometriegerät gemäß einem der Ansprüche 1 bis 5, bei dem das weitere System adaptiver Optik (31, 32) zwischen der Laserquelle und der Bildebene des Mikroskopobjektivs angeordnet ist, wobei das System adaptiver Optik (31, 32) dazu ausgelegt ist, die Stärke des Laserstrahls (11, 21) in der Bildebene (P1) des Mikroskopobjektivs (14) räumlich zu ändern.

7. Raman-Mikroskopie- oder Raman-Mikrospektromettiegerät gemäß Anspruch 6, bei dem das weitere System adaptiver Optik (31, 32) dazu ausgelegt ist, die Stärke und/oder die Phase des Laserstrahls (11, 21) in der Bildebene des Mikroskopobjektivs (14) oder in der Pupillenebene des Mikroskopobjektivs in Abhängigkeit von der analysierten Probe (20) dynamisch zu modulieren.

8. Raman-Mikroskopie- oder Raman-Mikrospektrometriegerät gemäß einem der Ansprüche 1 bis 6, wobei das System adaptiver Optik (33, 33A, 33B) dazu ausgelegt ist, die Stärke und/oder die Phase des Raman-Diffusionsstrahls (220) am Eingang des Spektrometers (16, 17) dynamisch zu modulieren, um im erfaßten Raman-Signal die durch das Spektrometer (16, 17) eingebrachten optischen Abweichungen, zum Beispiel Astigmatismus, zu reduzieren.

9. Raman-Mikroskopie- oder Raman-Mikrospektrometriegerät gemäß den Ansprüchen 2 und 8, bei dem das System adaptiver Optik (33B) auf dem optischen Weg des Raman-Diffusionsstrahls (220) zwischen dem konfokalen Loch (19) und einem Eingangsspalt (27) des Spektrometers (17) angeordnet ist, und wobei das System adaptiver Optik (33B) dazu ausgelegt ist, das Bild des konfokalen Lochs (19) auf dem Eingangsspalt (27) des Spektrometers zu bilden.

10. Verfahren der Raman-Mikroskopie oder Raman-Mikrospektrometrie mit den folgenden Schritten:
- Aussenden eines Laserstrahls (11) durch eine Laserquelle (10) bei einer Anregungswellenlänge λ,
- Fokalisieren des Laserstrahls (11) durch ein Mikroskopobjektiv (14) auf eine Bildebene des Mikroskopobjektivs (14), wobei der fokalisierte Laserstrahl (21) dazu bestimmt ist, eine Probe (20) zu beleuchten,
- Sammeln eines optischen Diffusionsstrahls (22) durch ein optisches System (14),
- Filtern des optischen Diffusionsstrahls (22) durch einen Filter (13), um ihn einerseits in einen elastischen Diffusionsstrahl oder Rayleigh-Strahl und andererseits in einen Raman-Diffusionsstrahl (220) zu trennen,
- Empfangen und Messen des Raman-Diffusionsstrahls (220) durch ein Raman-Spektrometer (16, 17),
- Filtern des Raman-Diffusionsstrahls (220) durch ein zwischen dem Objektiv des Mikroskops (14) und dem Raman-Spektrometer (16, 17) angeordnetes konfokales Loch (19),
und mit einem Schritt der Verwendung eines auf einem optischen Weg des Raman-Diffusionsstrahls (220) vor dem konfokalen Loch angeordneten Systems adaptiver Optik (33, 33A, 33B), wobei das System adaptiver Optik (33, 33A, 33B) dazu ausgelegt ist, auf dem Eingangsspalt des Spektrometers eine Energieverteilung elliptischer Form im Innern des weit geöffneten konfokalen Lochs zu erzeugen, um eine Energieverteilung in der Richtung der Höhe des Schlitzes zu erhalten.

## Claims

1. A Raman microscopy or Raman microspectrometry apparatus (100) of confocal type comprising:
- a laser source (10) suitable for emitting a laser beam (11) at an excitation wavelength A;
- a microscope objective (14) suitable for receiving the laser beam (11) and focusing the laser beam in an image plane of the microscope objective (14), the focused laser beam (21) being intended to illuminate a sample (20);
- an optical system (14) suitable for collecting a scattering optical beam (22) on the sample;
- a filter (13) suitable for receiving the scattering optical beam (22) and separating the scattering optical beam (22) into a Rayleigh scattering beam, on the one side, and a Raman scattering beam (220), on the other side; and
- a detection system (16, 17) comprising a Raman spectrometer (16, 17) suitable for receiving and measuring the Raman scattering beam (220) collected,
- a confocal hole (19) positioned between the microscope objective (14) and the Raman spectrometer (16, 17) on the optical path of the Raman scattering beam (220),
wherein the Raman microscopy or Raman microspectrometry apparatus (100) further comprises:
- an adaptive optics system (33, 33A, 33B) positioned on an optical path of the Raman scattering beam (220) upstream of the confocal hole (19), said adaptive optics system (33, 33A, 33B) being configured to generate an energy distribution having an elliptical shape inside the confocal hole (19) open wide on the entrance slit (27) of the spectrometer, so as to obtain an energy distribution in the direction of the height of the slit.

2. A Raman microscopy or Raman microspectrometry apparatus according to claim 1, wherein another adaptive optics system (33, 33A, 33B) is positioned on the optical path of the Raman scattering beam (220) downstream of the confocal hole (19).

3. A Raman microscopy or Raman microspectrometry apparatus according to claim 2, wherein the laser beam (11) has a Gaussian cross-section, the confocal hole (19) has a non-circular or angular shape, and further comprising one other adaptive optics system (31, 32) positioned between the laser source and the filtering means (13) on an optical path of the laser beam, this other adaptive optics system (31, 32) being configured to adapt the cross-section of the laser beam focused on the sample to the shape of the confocal hole (19), in the plane of the confocal hole (19).

4. A Raman microscopy or Raman microspectrometry apparatus according to one of claims 1 to 3, further comprising a wavefront detector (18) positioned on an optical path of the laser beam reflected by the sample (20), wherein the wavefront detector (18) is positioned in a plane optically conjugate to the image plane (P1) of the microscope objective (14), and the wavefront detector (18) is suitable for detecting a position of the sample in an image plane (P1) of the microscope objective (14).

5. A Raman microscopy or Raman microspectrometry apparatus according to one of claims 1 to 4, wherein said other adaptive optics system (31) comprises at least two adaptive mirrors positioned in series on the optical path of the laser beam, between the laser source and the microscope objective, said at least two adaptive mirrors each have a variable focal length and are positioned in such a way as to form a focusing adaptive optical system having variable magnification or an afocal adaptive optical system having variable magnification, said other adaptive optical system being configured to modify the diameter of the laser beam (11) on the entrance pupil of the microscope objective (14) according to the diameter of the entrance pupil of the microscope objective (14).

6. A Raman microscopy or Raman microspectrometry apparatus according to one of claims 1 to 5, wherein said other adaptive optics system (31, 32) is positioned between the laser source and the image plane of the microscope objective, and the adaptive optics system (31, 32) is configured to spatially modulate the intensity of the laser beam (11, 21) in the image plane (P1) of the microscope objective (14).

7. A Raman microscopy or Raman microspectrometry apparatus according to claim 6, wherein said other adaptive optics system (31, 32) is configured to dynamically modulate the intensity and/or the phase of the laser beam (11, 21) in the image plane of the microscope objective (14) or in the pupil plane of the microscope objective, according to the sample (20) analyzed.

8. A Raman microscopy or Raman microspectrometry apparatus according to one of claims 1 to 6, said adaptive optics system (33, 33A, 33B) being configured to dynamically modulate the intensity and/or the phase of the Raman scattering beam (22) at the entrance of the spectrometer (16, 17) in order to reduce, in the Raman signal detected, the optical aberrations such as astigmatism caused by the spectrometer (16, 17).

9. A Raman microscopy or Raman microspectrometry apparatus according to claims 2 and 8, wherein said adaptive optics system (33B) is positioned on the optical path of the Raman scattering beam (220) between the confocal hole (19) and an entrance slit (27) of the spectrometer (17), and said adaptive optics system (33B) is configured to form the image of the confocal hole (19) on the entrance slit (27) of the spectrometer.

10. A Raman microscopy or Raman microspectrometry method comprising the following steps:
- emitting, by a laser source (10), a laser beam (11) at an excitation wavelength λ;
- focusing, by a microscope objective (14), the laser beam (11) in an image plane of the microscope objective (14), the focused laser beam (21) being intended to illuminate a sample (20);
- collecting a scattering optical beam (22) by an optical system (14);
- filtering the scattering optical beam (22) by a filter (13) in such a way as to separate said beam into an elastic scattering or Rayleigh scattering beam, on the one side, and a Raman scattering beam (220), on the other side;
- receiving and measuring the Raman scattering beam (220) by a Raman spectrometer (16, 17);
- filtering the Raman scattering beam (220) by a confocal hole (19) positioned between the microscope objective (14) and the Raman spectrometer (16, 17);
and comprising a step of using an adaptive optics system (33, 33A, 33B) positioned on an optical path of the Raman scattering beam (220) upstream of the confocal hole (19), said adaptive optics system (33, 33A, 33B) being configured to generate an energy distribution having an elliptical shape inside the confocal hole (19) open wide on the entrance slit (27) of the spectrometer, so as to obtain an energy distribution in the direction of the height of the slit.
